# EUROPEAN PATENT APPLICATION

(11) **EP 4 474 903 A1**
(43) Date of publication of application: **11.12.2024**
(21) Application number: 23773440.5
(22) Date of filing: 14.01.2023
(51) Int. Cl.: G03B 21/20, G03B 21/00, G02B 27/14, G02B 27/28, G02B 27/01, H04N 9/31

(54) **PROJECTION OPTICAL MACHINE, DISPLAY DEVICE, AND VEHICLE**

(30) Priority: 25.03.2022 CN 202220679658 U
(71) Applicant: Huawei Technologies Co., Ltd., Shenzhen, Guangdong 518129 (CN)
(72) Inventor: PENG, Haijun, Shenzhen, Guangdong 518129 (CN)
(74) Representative: Maiwald GmbH
(86) International application number: PCT/CN2023/072226
(87) International publication number: WO 2023/179188

(57) **Abstract**

A projector optical engine, a display device, and a vehicle are provided, and pertain to the field of image display technologies. The projector optical engine includes a first light uniformizing device (1), a red-green light providing component (2), a first dichroic mirror (3), a second light uniformizing device (4), a blue light providing component (5), a converging lens (6), and an imaging component (7). The first light uniformizing device (1) is located on a light path between the red-green light providing component (2) and the first dichroic mirror (3), and the second light uniformizing device (4) is located on a light path between the first dichroic mirror (3) and the blue light providing component (5). A red-green light beam provided by the red-green light providing component (2) and a blue light beam provided by the blue light providing component (5) are respectively transmitted and reflected through the first dichroic mirror (3) and combined into one beam, and the converging lens (6) is located on a light path between the first dichroic mirror (3) and the imaging component (7), so that a volume of the projector optical engine is small, and impact caused by blue light aging can be reduced.

## Description

This application claims priority to Chinese Patent Application No. 202220679658.X, filed with the China National Intellectual Property Administration on March 25, 2022 and entitled "PROJECTOR OPTICAL ENGINE, DISPLAY DEVICE, AND VEHICLE", which is incorporated herein by reference in its entirety.

### TECHNICAL FIELD

This application relates to the field of image display technologies, and in particular, to a projector optical engine, a display device, and a vehicle.

### BACKGROUND

A projector optical engine is a device that provides illumination light for a spatial light modulator to generate image light, and projects the image light onto a screen after the image light is imaged through a lens.

In a conventional technology, the projector optical engine includes a tricolor light collection and collimation component, a dichroic mirror, a light uniformizing device, a converging lens, and an imaging component, and the imaging component includes a polarization beam splitter, a spatial light modulator, and a lens. The tricolor light collection and collimation component collimates tricolor light. The dichroic mirror combines the collimated tricolor light into one light beam. The light uniformizing device performs light uniformizing processing on the light beam. The converging lens converges a light beam obtained through light uniformizing processing, and transmits the light beam to the imaging component. The light beam is used as illumination light of the imaging component for imaging on the imaging component. Because light uniformizing processing is performed only after the tricolor light is combined into one beam, and a specific distance needs to be kept between the light uniformizing device and the converging lens, a volume of the projector optical engine is large.

### SUMMARY

This application provides a projector optical engine, a display device, and a vehicle, so that a volume of the projector optical engine is small.

According to a first aspect, this application provides a projector optical engine. The projector optical engine includes a first light uniformizing device, a red-green light providing component, a first dichroic mirror, a second light uniformizing device, a blue light providing component, a converging lens, and an imaging component. The first light uniformizing device is located on a light path between the red-green light providing component and the first dichroic mirror. The second light uniformizing device is located on a light path between the first dichroic mirror and the blue light providing component. A red-green light beam provided by the red-green light providing component and a blue light beam provided by the blue light providing component are respectively transmitted and reflected through the first dichroic mirror and combined into one beam. The converging lens is located on a light path between the first dichroic mirror and the imaging component. The imaging component is configured to: perform imaging on light output by the converging lens, and output imaging light. The projector optical engine may be referred to as a projection device.

In the solution shown in this application, the red-green light and the blue light respectively correspond to the first light uniformizing device and the second light uniformizing device, and the blue light providing component, the second light uniformizing device, and the first dichroic mirror are disposed between the first light uniformizing device and the converging lens. In this way, when specific spacing is maintained between the first light uniformizing device and the converging lens, the blue light providing component, the second light uniformizing device, and the first dichroic mirror are disposed by fully using the spacing, so that a volume of the projector optical engine is small. In addition, the blue light beam independently passes through the second light uniformizing device. Even if a blue light aging problem occurs in the second light uniformizing device, only the blue light beam is affected, so that impact caused by blue light aging can be reduced.

In a possible implementation, the projector optical engine further includes a first polarization conversion system (polarization conversion system, PCS) and a second polarization conversion system. The first polarization conversion system is located on a light path between the first light uniformizing device and the first dichroic mirror. The second polarization conversion system is located on a light path between the second light uniformizing device and the first dichroic mirror.

In the solution shown in this application, when the red-green light beam output by the red-green light providing component is natural light, the first polarization conversion system is disposed to convert the red-green light beam into polarized light, so that a light loss can be reduced when the red-green light beam passes through a polarization beam splitter subsequently. When the blue light beam output by the blue light providing component is natural light, the second polarization conversion system is disposed to convert the blue light beam into polarized light, so that a light loss can be reduced when the blue light beam passes through the polarization beam splitter subsequently.

In a possible implementation, the projector optical engine further includes a first polarization conversion system. The first polarization conversion system is located on a light path between the first light uniformizing device and the first dichroic mirror.

In the solution shown in this application, when the red-green light beam output by the red-green light providing component is natural light, the first polarization conversion system is disposed to convert the red-green light beam into polarized light, so that a red-green light loss can be reduced when the red-green light passes through a polarization beam splitter subsequently. In addition, because a proportion of the blue light beam is low, even if a blue light loss is caused after the blue light beam passes through the polarization beam splitter, light efficiency of the projector optical engine is slightly affected.

In a possible implementation, the first light uniformizing device is a compound eye lens, a free-form surface lens, or an integrator rod; and the second light uniformizing device is a compound eye lens, a free-form surface lens, or an integrator rod. In this way, a plurality of forms of light uniformizing devices can be provided.

In a possible implementation, the red-green light providing component includes a first collection lens group, a red light source, a second dichroic mirror, a second collection lens group, and a green light source. The first collection lens group is located on a light path between the red light source and the second dichroic mirror. The second collection lens group is located on a light path between the green light source and the second dichroic mirror. A red light beam provided by the red light source and a green light beam provided by the green light source are combined into the red-green light beam through the second dichroic mirror. The red light source is a laser diode (laser diode, LD) light source or a light-emitting diode (light-emitting diode, LED) light source, and the green light source is an LD light source or an LED light source.

In the solution shown in this application, the red light source provides the red light beam, the green light source provides the green light beam, and the red light beam and the blue light beam are combined into the red-green light beam through the dichroic mirror.

In a possible implementation, the blue light providing component includes a blue light source and a third collection lens group. The blue light source is an LD light source or an LED light source. In this way, the blue light providing component is provided.

In a possible implementation, the converging lens includes an integral lens and/or a focusing lens.

In a possible implementation, the imaging component includes a beam splitter, a reflective spatial light modulator, and a lens. The beam splitter is located on a light path between the converging lens and the reflective spatial light modulator, and is located on a light path between the reflective spatial light modulator and the lens. In this way, the imaging component is provided.

In a possible implementation, the beam splitter is a polarization beam splitter, and the reflective spatial light modulator is a liquid crystal on silicon (liquid crystal on silicon, LCOS); or the beam splitter is a beam splitter prism, and the reflective spatial light modulator is a digital micromirror device (digital micromirror device, DMD).

In the solution shown in this application, there are a plurality of beam splitters and reflective spatial light modulators that can be used in a projector optical engine.

In a possible implementation, the polarization beam splitter is a metal wire-grid polarization beam splitter (wire-grid polarization beam splitter, WGP).

In the solution shown in this application, the polarization beam splitter is a WGP. Because the WGP is relatively insensitive to an incident angle of incident light, and a change of the incident angle has relatively small impact on a contrast of the projector optical engine, the contrast of the projector optical engine can be relatively stable.

In a possible implementation, the imaging component includes a lens and a liquid crystal display (liquid crystal display, LCD). The LCD is located on a light path between the converging lens and the lens. In this way, the imaging component may also be implemented by using the LCD and the lens.

According to a second aspect, this application provides a display device, including the projector optical engine shown in the first aspect or any possible implementation and a reflective component for reflecting a light beam output by the projector optical engine.

In a possible implementation, the display device further includes a diffusion screen. The diffusion screen is located on a light path between the projector optical engine and the reflective component, and is configured to diffuse imaging light output by the projector optical engine. In this way, the diffusion screen can be configured to make an image of imaging have a large angle of field of view.

According to a third aspect, this application provides a vehicle, including a windshield and the display device shown in the first aspect or the possible implementations of the first aspect. For example, the vehicle includes but is not limited to an automobile, an airplane, a train, a ship, or the like.

### BRIEF DESCRIPTION OF DRAWINGS

FIG. 1 is a diagram of a structure of a projector optical engine according to an example embodiment of this application;
FIG. 2 is a diagram of a structure of a projector optical engine according to an example embodiment of this application;
FIG. 3 is a diagram of a structure of a projector optical engine according to an example embodiment of this application;
FIG. 4 is a diagram of a structure of a projector optical engine according to an example embodiment of this application;
FIG. 5 is a diagram of a structure of a projector optical engine according to an example embodiment of this application;
FIG. 6 is a diagram of a structure of a projector optical engine according to an example embodiment of this application;
FIG. 7 is a diagram of a structure of a projector optical engine according to an example embodiment of this application;
FIG. 8 is a diagram of a structure of a projector optical engine according to an example embodiment of this application;
FIG. 9 is a diagram of a structure of a projector optical engine according to an example embodiment of this application;
FIG. 10 is a diagram of a structure of a display device according to an example embodiment of this application; and
FIG. 11 is a diagram of a structure of a vehicle according to an example embodiment of this application.

### Reference numerals:

1: first light uniformizing device; 2: red-green light providing component; 3: first dichroic mirror; 4: second light uniformizing device; 5: blue light providing component; 6: converging lens; 7: imaging component; 8: first polarization conversion system; 9: second polarization conversion system;
21: first collection lens group; 22: red light source; 23: second dichroic mirror; 24: second collection lens group; 25: green light source;
51: blue light source; 52: third collection lens group;
71: beam splitter; 72: reflective spatial light modulator; 73: lens; 74: LCD;
01: reflective component; 02: diffusion screen; 10: windshield.

### DESCRIPTION OF EMBODIMENTS

To make objectives, technical solutions, and advantages of this application clearer, the following further describes implementations of this application in detail with reference to the accompanying drawings.

An embodiment of this application provides a projector optical engine. The projector optical engine may be used in an audio and video entertainment scenario and an assisted driving scenario. The projector optical engine may be used independently, or may be integrated into another device as a component. For example, the projector optical engine may be integrated into a head-up display (head-up display, HUD) device of a vehicle, or may be integrated into a head-mounted display (head-mounted display) device, or may be integrated into an optical desktop display device. The projector optical engine is integrated into these devices and may be used as an image generation unit (picture generation unit, PGU) of these devices.

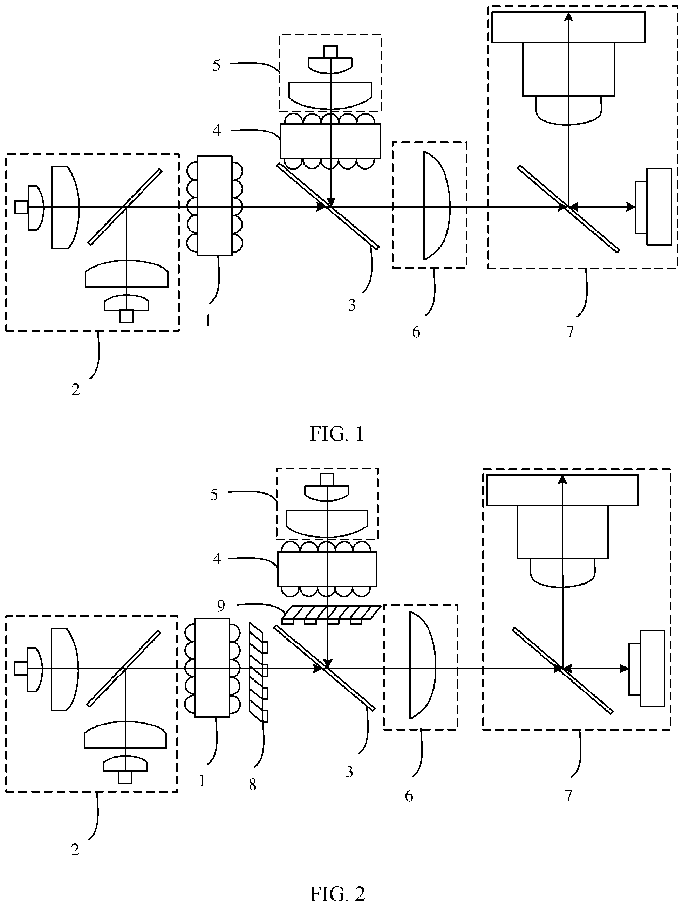

FIG. 1 is a diagram of a structure of a projector optical engine. As shown in FIG. 1, the projector optical engine includes a first light uniformizing device 1, a red-green light providing component 2, a first dichroic mirror 3, a second light uniformizing device 4, a blue light providing component 5, a converging lens 6, and an imaging component 7. The first light uniformizing device 1 is located on a light path between the red-green light component 2 and the first dichroic mirror 3. The second light uniformizing device 4 is located on a light path between the first dichroic mirror 3 and the blue light providing component 5. The converging lens 6 is located on a light path between the first dichroic mirror 3 and the imaging component 7.

The red-green light providing component 2 outputs a red-green light beam including red light and green light, and the red-green light beam is incident to the first light uniformizing device 1. The first light uniformizing device 1 performs light uniformizing processing on the red-green light beam, so that the red-green light beam is more uniform. The red-green light beam is incident to the first dichroic mirror 3. In addition, the blue light providing component 5 outputs a blue light beam, and the blue light beam is incident to the second light uniformizing device 4. The second light uniformizing device 4 performs light uniformizing processing on the blue light beam, so that the blue light beam is more uniform. A blue light beam obtained through light uniformizing processing is incident to the first dichroic mirror 3. The first dichroic mirror 3 is configured to: transmit the red-green light beam and reflect the blue light beam. The red-green light beam is transmitted from the first dichroic mirror 3, the blue light beam is reflected by the first dichroic mirror 3, and the red-green light beam transmitted by the first dichroic mirror 3 and the blue light beam reflected by the first dichroic mirror 3 are combined into a beam of combined light, where the beam of combined light includes red light, green light, and blue light. The beam of combined light is incident to the converging lens 6, and the converging lens 6 is configured to converge the beam of combined light. The beam of combined light is incident to the imaging component 7 through the converging lens 6. The beam of combined light is used as illumination light of the imaging component 7. After modulating image content to the illumination light, the imaging component 7 outputs the illumination light to which the image content is modulated. The illumination light to which the image content is modulated may also be referred to as imaging light.

In the projector optical engine shown in FIG. 1, in a case in which an appropriate distance needs to be maintained between the light uniformizing device and the converging lens 6, after light uniformizing processing is separately performed on the red-green light beam and the blue light beam, beam combination is performed, and the first dichroic mirror 3, the second light uniformizing device 4, and the blue light providing component 5 are disposed between the first light uniformizing device 1 and the converging lens 6. In this way, a size of the projector optical engine is reduced in a transmission direction of a light beam obtained by combining the red light, the green light, and the blue light, and therefore a volume of the projector optical engine can be reduced. In addition, a proportion of blue light in white light is low, and the second light uniformizing device 4 separately performs light uniformizing processing on the blue light. After a blue light aging problem occurs in the second light uniformizing device 4, only output of the blue light is affected, but output of the red-green light is not affected.

For example, when the red-green light beam provided by the red-green light providing component 2 is natural light, and the blue light beam provided by the blue light providing component 5 is natural light, considering that the imaging component 7 uses polarized light, to improve light efficiency, the red-green light beam and the blue light beam are changed to polarized light before being incident to the imaging component 7. FIG. 2 is a diagram of another structure of the projector optical engine. As shown in FIG. 2, the projector optical engine further includes a first polarization conversion system 8 and a second polarization conversion system 9. The first polarization conversion system 8 is located on a light path between the first light uniformizing device 1 and the first dichroic mirror 3. The second polarization conversion system 9 is located on a light path between the second light uniformizing device 4 and the first dichroic mirror 3. The first polarization conversion system 8 and the second polarization conversion system 9 are configured to change a light beam to polarized light.

The red-green light providing component 2 outputs a red-green light beam including red light and green light, and the red-green light beam is incident to the first light uniformizing device 1. The first light uniformizing device 1 performs light uniformizing processing on the red-green light beam, so that the red-green light beam is more uniform. The red-green light beam is incident to the first polarization conversion system 8, and the first polarization conversion system 8 changes the red-green light beam to polarized light. The red-green light beam that is changed to the polarized light is incident to the first dichroic mirror 3. In addition, the blue light providing component 5 outputs a blue light beam, and the blue light beam is incident to the second light uniformizing device 4. The second light uniformizing device 4 performs light uniformizing processing on the blue light beam, so that the blue light beam is more uniform. A blue light beam obtained through light uniformizing processing is incident to the second polarization conversion system 9, and the second polarization conversion system 9 changes the blue light beam to polarized light. The blue light beam that is changed to the polarized light is incident to the first dichroic mirror 3. The red-green light beam and the blue light beam are combined into a beam of combined light through the first dichroic mirror 3. The beam of combined light includes red light, green light, and blue light. The beam of combined light is incident to the converging lens 6, and the converging lens 6 is configured to converge the beam of combined light. The beam of combined light is incident to the imaging component 7 through the converging lens 6. The beam of combined light is used as illumination light of the imaging component 7, and the imaging component 7 modulates image content to the illumination light for output.

In this way, when the projector optical engine has a polarization requirement, the PCS changes natural light into polarized light, to meet polarization requirements in scenarios such as 3D and HUD. Particularly, when a light modulator in the imaging component 7 is an LCOS, a light beam of the incident imaging component 7 is changed to polarized light, so that light efficiency can be improved, and a polarizer does not need to be added to improve a contrast of the projector optical engine. The contrast is a contrast of an image obtained by performing imaging by the projector optical engine.

For example, the first light uniformizing device 1 is a compound eye lens, a free-form surface lens, or an integrator rod; and the second light uniformizing device 4 is a compound eye lens, a free-form surface lens, or an integrator rod. When light uniformizing processing is performed on the polarized light, the first light uniformizing device 1 and the second light uniformizing device 4 are compound eye lenses.

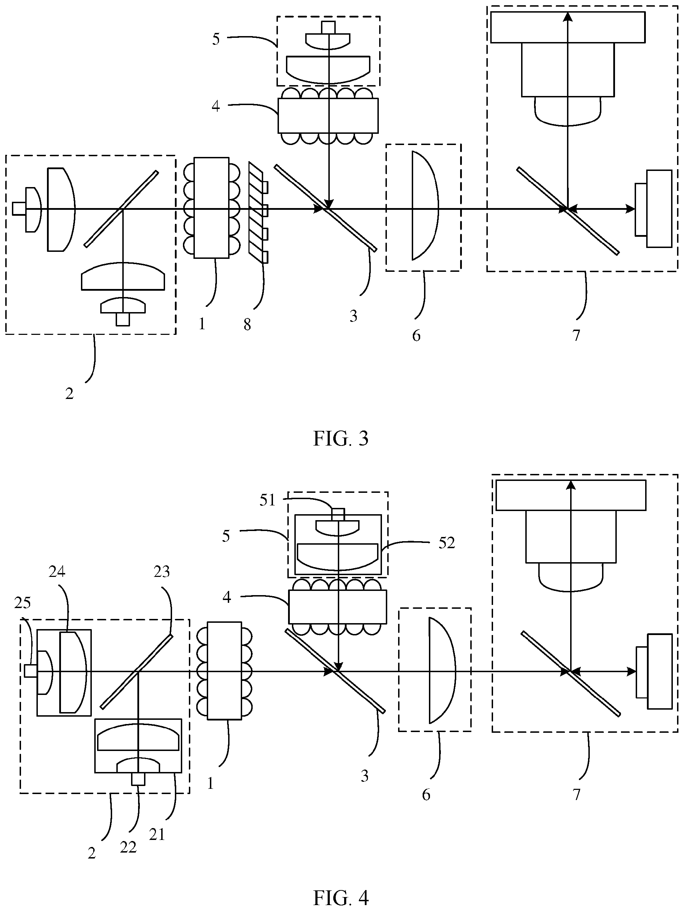

For example, when the red-green light beam provided by the red-green light providing component 2 is natural light, and the blue light beam provided by the blue light providing component 5 is natural light, considering that the imaging component 7 uses polarized light, to improve light efficiency, the red-green light beam is changed to polarized light before being incident to the imaging component 7, the blue light beam is not changed to polarized light, and a half of the blue light beam is lost in the imaging component 7. Because a proportion of the blue light beam in the white light system is low, low brightness of the blue light has little impact on the contrast of the projector optical engine. In addition, the brightness of the blue light may be further increased (for example, a current of a blue light source is increased), to compensate for a loss of the blue light beam in the imaging component 7. Alternatively, the blue light source is a laser light source, and the output blue light beam is polarized light. FIG. 3 is a diagram of another structure of the projector optical engine. As shown in FIG. 3, the projector optical engine further includes a first polarization conversion system 8. The first polarization conversion system 8 is located on a light path between the first light uniformizing device 1 and the first dichroic mirror 3.

The red-green light providing component 2 outputs a red-green light beam including red light and green light, and the red-green light beam is incident to the first light uniformizing device 1. The first light uniformizing device 1 performs light uniformizing processing on the red-green light beam, so that the red-green light beam is more uniform. The red-green light beam is incident to the first polarization conversion system 8, and the first polarization conversion system 8 changes the red-green light beam to polarized light. The red-green light beam that is changed to the polarized light is incident to the first dichroic mirror 3. In addition, the blue light providing component 5 outputs a blue light beam, and the blue light beam is incident to the second light uniformizing device 4. The second light uniformizing device 4 performs light uniformizing processing on the blue light beam, so that the blue light beam is more uniform. A blue light beam obtained through light uniformizing processing is incident to the first dichroic mirror 3. The red-green light beam and the blue light beam are combined into a beam of combined light through the first dichroic mirror 3. The beam of combined light includes red light, green light, and blue light. The beam of combined light is incident to the converging lens 6, and the converging lens 6 is configured to converge the beam of combined light. The beam of combined light is incident to the imaging component 7 through the converging lens 6. The beam of combined light is used as illumination light of the imaging component 7, and the imaging component 7 modulates image content to the illumination light for output.

For example, the red-green light providing component 2 may include a first collection lens group 21, a red light source 22, a second dichroic mirror 23, a second collection lens group 24, and a green light source 25. The first collection lens group 21 is located on a light path between the red light source 22 and the second dichroic mirror 23. The second collection lens group 24 is located on a light path between the green light source 25 and the second dichroic mirror 23. The second dichroic mirror 23 is located on a light path between the red light source 22 and the first light uniformizing device 1.

The red light source 22 is configured to output a red light beam, and the red light source 22 may be an LED light source or an LD light source. The red light source 22 outputs a red light beam, and the red light beam is incident to the second dichroic mirror 23 through the first collection lens group 21, and the first collection lens group 21 includes one or more lenses, which are configured to focus and collimate the red light beam. The green light source 25 is configured to output a green light beam, and the green light source 25 may be an LED light source or an LD light source. The green light source 25 outputs a green light beam. The green light beam is incident to the second dichroic mirror 23 through the second collection lens group 24, and the second collection lens group 24 includes one or more lenses, which are configured to focus and collimate the green light beam. After passing through the second dichroic mirror 23, the red light beam and the green light beam are combined into a red-green light beam, which is incident to the first light uniformizing device 1.

In an implementation, the second dichroic mirror 23 is configured to reflect a red light beam and transmit a green light beam. The red light beam is reflected by the second dichroic mirror 23, the green light beam is transmitted by the second dichroic mirror 23, and the red light beam reflected by the second dichroic mirror 23 and the green light beam transmitted by the second dichroic mirror 23 are combined into a red-green light beam, as shown in FIG. 4.

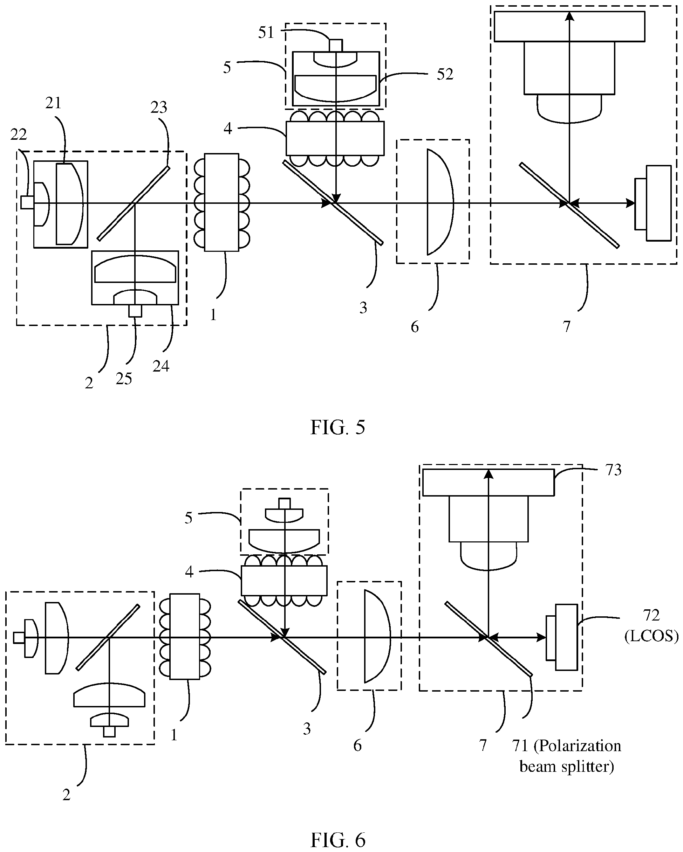

In another implementation, the second dichroic mirror 23 is configured to transmit a red light beam and reflect a green light beam. The red light beam is transmitted from the second dichroic mirror 23, the green light beam is reflected by the second dichroic mirror 23, and the red light beam transmitted by the second dichroic mirror 23 and the green light beam reflected by the second dichroic mirror 23 are combined into a red-green light beam, as shown in FIG. 5.

It should be noted that light output by the LED light source is natural light, and light output by the LD light source is polarized light.

For example, as shown in FIG. 4 and FIG. 5, the blue light providing component 5 includes a blue light source 51 and a third collection lens group 52. The blue light source 51 is configured to output a blue light beam, and the blue light source 51 may be an LED light source or an LD light source. The third collection lens group 52 includes one or more lenses, configured to focus and collimate a blue light beam.

In this way, only one dichroic mirror is used before the red-green light beam is incident to the first light uniformizing device 1, and a light beam obtained through light combination diverges slowly with a distance extension, and no lens needs to be added to improve collection efficiency. In addition, because the red light beam, the green light beam, and the blue light beam pass through paths of a similar length before being incident to the converging lens 6, the first collection lens group 21, the second collection lens group 24, and the third collection lens group 52 may use a same collection lens group, thereby reducing introduction of a differential optical device, and reducing manufacturing difficulty.

For example, the converging lens 6 includes an integral lens and/or a focusing lens. There may be one or more lenses in the integral lens, and a specific quantity of lenses may be designed according to an actual requirement. Only one lens is shown in the accompanying drawings in embodiments of this application. There may be one or more focusing lenses.

For example, the imaging component 7 may have a plurality of structures. The following provides two feasible structures.

In an implementation, the imaging component 7 includes a beam splitter 71, a reflective spatial light modulator 72, and a lens 73. The beam splitter 71 is located on a light path between the converging lens 6 and the reflective spatial light modulator 72, and is located on a light path between the reflective spatial light modulator 72 and the lens 73. The beam splitter 71 is configured to output a combined light beam to the reflective spatial light modulator 72, the reflective spatial light modulator 72 is configured to modulate image content to the combined light beam, the beam splitter 71 is further configured to output, to the lens 73, the light beam to which the image content is modulated, and the lens 73 is configured to perform imaging and output imaging light.

In this way, the combined light beam (the combined light beam includes the red light beam, the green light beam, and the blue light beam) entering the beam splitter 71 is incident to the reflective spatial light modulator 72. After modulating image content to the incident combined light beam, the reflective spatial light modulator 72 reflects, to the beam splitter 71, the combined light beam to which the image content is modulated. The beam splitter 71 outputs, to the lens 73, the combined light beam to which image content is modulated. After performing imaging on the combined light beam to which the image content is modulated, the lens 73 outputs imaging light.

Optionally, FIG. 6 is a diagram of another structure of the projector optical engine. As shown in FIG. 6, the beam splitter 71 is a polarization beam splitter, and the reflective spatial light modulator 72 is an LCOS. A light beam incident to the polarization beam splitter is transmitted from the polarization beam splitter, and the light beam is incident to the LCOS. The LCOS modulates the image content to the light beam, the LCOS outputs, to the polarization beam splitter, the light beam to which the image content is modulated, and the polarization beam splitter reflects, to the lens 73, the light beam to which the image content is modulated. It should be noted that, if a polarization state of combined light that is incident to the converging lens 6 is a P polarization state, the combined light may be transmitted from the polarization beam splitter completely; or if the combined light is natural light, only light in a P polarization state in the combined light can be transmitted from the polarization beam splitter. A light beam incident to the LCOS is in a P polarization state, and a polarization state of a light beam output by the LCOS is an S polarization state, so that a light beam on which image content is modulated is reflected by the polarization beam splitter to the lens 73.

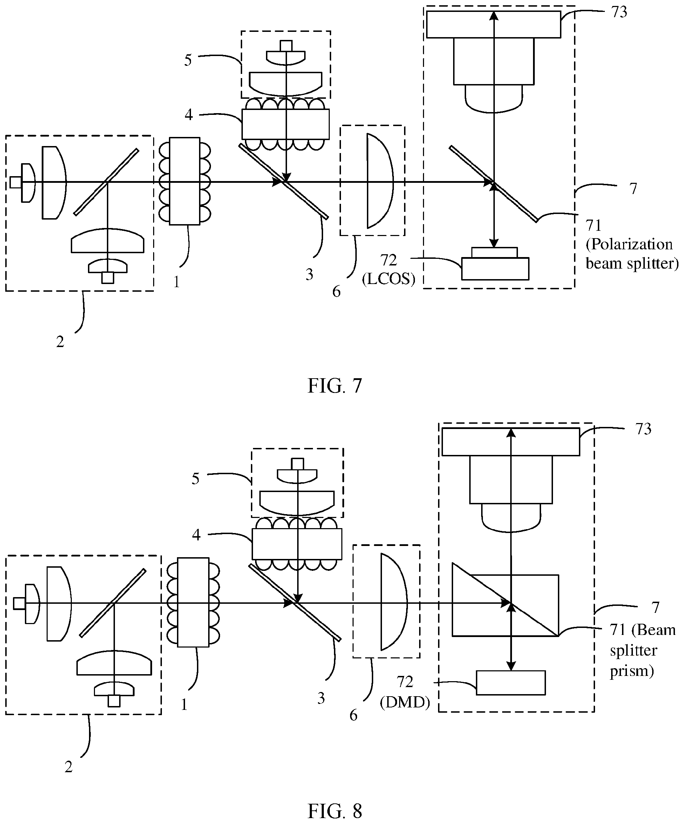

Alternatively, FIG. 7 is a diagram of another structure of the projector optical engine. As shown in FIG. 7, the beam splitter 71 is a polarization beam splitter, and the reflective spatial light modulator 72 is an LCOS. A light beam incident to the polarization beam splitter is reflected by the polarization beam splitter, and the light beam is incident to the LCOS. The LCOS modulates image content to the light beam, the LCOS outputs, to the polarization beam splitter, the light beam to which the image content is modulated, and the polarization beam splitter transmits, to the lens 73, the light beam to which the image content is modulated. It should be noted that, if a polarization state of combined light that is incident to the converging lens 6 is an S polarization state, the combined light may be reflected by the polarization beam splitter completely; or if the combined light that is incident to the converging lens 6 is natural light, only light in an S polarization state in the combined light can be reflected by the polarization beam splitter. A light beam incident to the LCOS is in an S polarization state, and a polarization state of a light beam output by the LCOS is a P polarization state, so that a light beam on which image content is modulated is transmitted from the polarization beam splitter to the lens 73.

The polarization beam splitter may be a polarization beam splitter (polarization beam splitter, PBS), or may be a WGP. When the polarization beam splitter uses the WGP to implement polarization beam splitting, sensitivity of the WGP to an incident angle of incident light is low, so that a change of the incident angle has low impact on a contrast of the projector optical engine.

Optionally, FIG. 8 is a diagram of a structure of the projector optical engine. As shown in FIG. 8, the beam splitter 71 is a beam splitter prism, and the reflective spatial light modulator 72 is a DMD. A light beam incident to the beam splitter prism is reflected by the beam splitter prism, the light beam is incident to the DMD, the DMD modulates image content to the light beam, the DMD outputs, to the beam splitter prism, the light beam to which the image content is modulated, and the light beam to which the image content is modulated is transmitted by the beam splitter prism to the lens 73.

Alternatively, the beam splitter 71 is a beam splitter prism, and the reflective spatial light modulator 72 is a DMD. A light beam incident to the beam splitter prism is transmitted from the beam splitter prism, the light beam is incident to the DMD, the DMD modulates image content to the light beam, the DMD outputs, to the beam splitter prism, the light beam to which the image content is modulated, and the light beam to which the image content is modulated is reflected by the beam splitter prism to the lens 73.

It should be noted that, in the projector optical engine light machine shown in FIG. 6 to FIG. 8, the blue light providing component 5 and the lens 73 are located on a same side, which specifically means that the blue light providing component 5 and the lens 73 are located on a same side of the light path between the converging lens 6 and the reflective spatial light modulator 72. In this way, when the blue light beam is reflected by the first dichroic mirror 3, both the blue light providing component 5 and the second light uniformizing device 4 are located on a same side as the lens 73, heights of the blue light providing component 5 and the second light uniformizing device 4 in a direction in which the blue light providing component 5 is located are less than a height of the lens 73 in the direction, and a size of the projector optical engine in the direction in which the blue light providing component 5 is located does not increase.

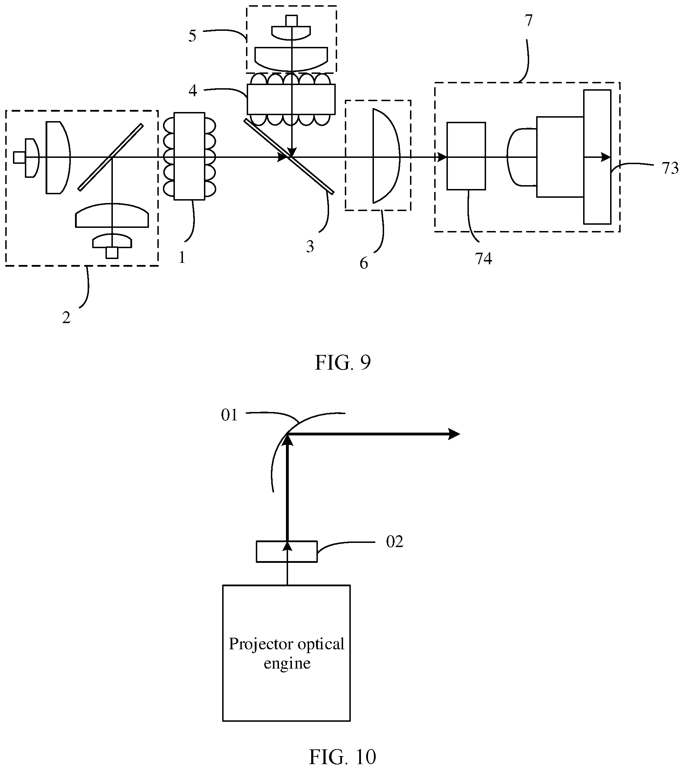

In another implementation, FIG. 9 is a diagram of another structure of the projector optical engine. As shown in FIG. 9, the imaging component 7 includes the lens 73 and an LCD 74, and the LCD 74 is located on a light path between the converging lens 6 and the lens 73. Combined light that passes through the converging lens 6 is incident to the LCD 74. The LCD 74 modulates image content to the combined light, and outputs, to the lens 73, a light beam to which the image content is modulated. The lens 73 performs imaging on the light beam to which the image content is modulated, and outputs imaging light.

An embodiment of this application further provides a display device. FIG. 10 is a diagram of a structure of the display device. As shown in FIG. 10, the display device includes the projector optical engine described above and a reflective component 01 configured to reflect a light beam output by the projector optical engine.

The projector optical engine outputs a light beam to the reflective component 01, and the reflective component 01 reflects the light beam to form a corresponding image.

Optionally, as shown in FIG. 10, the display device further includes a diffusion screen 02, and the diffusion screen 02 is located on a light path between the projector optical engine and the reflective component 01. The diffusion screen 02 is configured to receive a light beam output by the projector optical engine, and diffuse the light beam. The reflective component 01 reflects a light beam output by the diffusion screen 02, to form an image. Because the diffusion screen 02 diffuses the light beam, the formed image has a large angle of field of view.

Herein, when the imaging component 7 includes an LCOS or a DMD, the display device may include the diffusion screen 02. When the imaging component 7 includes an LCD, the display device may not include the diffusion screen 02.

Optionally, the reflective component 01 may be a reflector or the like. For example, the reflective component 01 is a curved surface reflector.

Optionally, the reflective component 01 may be a windshield (also referred to as a windscreen), to form an image. The windshield is a windshield of a vehicle. The vehicle includes but is not limited to an automobile, an airplane, a train, a ship, or the like. The display device may be an HUD, a desktop display, an in-vehicle display, or the like.

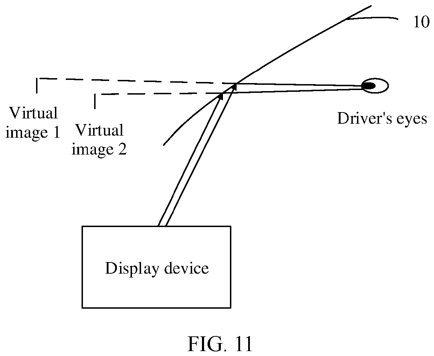

An embodiment of this application further provides a vehicle. FIG. 11 is a diagram of a structure of the vehicle. As shown in FIG. 11, the vehicle includes any display device shown above and a windshield 10. The windshield 10 is configured to reflect a light beam output by a projector optical engine, to form an image in front of a driver. The image is a virtual image. If the display device outputs a light beam to which a plurality of different pieces of image content are modulated, images of the plurality of different pieces of image content are separately formed. FIG. 11 shows images corresponding to two pieces of image content, that is, a virtual image 1 and a virtual image 2.

Optionally, the image is an augmented reality display image, and is used to display information such as indication information and navigation information of an external object. The indication information of the external object includes but is not limited to a safe inter-vehicle distance, a surrounding obstacle, and a reverse image. The navigation information includes but is not limited to a direction arrow, a distance, driving time, and the like.

Optionally, the image is a status display image, and is used to display status information of the vehicle. An automobile is used as an example. Status information of the automobile includes but is not limited to information such as a driving speed, a driving mileage, a fuel level, a water temperature, and a vehicle light status.

Optionally, the image includes an augmented reality display image and a status display image.

For example, the vehicle includes a car, a truck, a motorcycle, a bus, a ship, an airplane, a helicopter, a lawn mower, an entertainment vehicle, a playground vehicle, a construction device, a tram, a golf cart, a train, a trolley, and the like.

It should be noted that the foregoing parts may be randomly combined without violating logic. This is not limited in embodiments of this application.

In this application, terms such as "first" and "second" are used to distinguish same items or similar items that have basically same functions. It should be understood that there is no logical or time sequence dependency between "first" and "second", and a quantity and an execution sequence are not limited. It should also be understood that although the following description uses terms such as "first" and "second" to describe various elements, these elements should not be limited by the terms. These terms are merely used to distinguish one element from another element. For example, without departing from the scope of the various examples, a first collection lens group may be referred to as a second collection lens group, and similarly, a second collection lens group may be referred to as a first collection lens group. Both the first collection lens group and the second collection lens group may be collection lens groups, and in some cases, may be separate and different collection lens groups.

The term "A and/or B" in this application means three cases: A, B, and A and B.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application should be subject to the protection scope of the claims.

## Claims

1. A projector optical engine, comprising a first light uniformizing device (1), a red-green light providing component (2), a first dichroic mirror (3), a second light uniformizing device (4), a blue light providing component (5), a converging lens (6), and an imaging component (7), wherein
the first light uniformizing device (1) is located on a light path between the red-green light providing component (2) and the first dichroic mirror (3);
the second light uniformizing device (4) is located on a light path between the blue light providing component (5) and the first dichroic mirror (3), wherein a red-green light beam provided by the red-green light providing component (2) and a blue light beam provided by the blue light providing component (5) are respectively transmitted and reflected through the first dichroic mirror (3) and combined into one beam;
the converging lens (6) is located on a light path between the first dichroic mirror (3) and the imaging component (7); and
the imaging component (7) is configured to: perform imaging on light output by the converging lens (6), and output imaging light.

2. The projector optical engine according to claim 1, wherein the projector optical engine further comprises a first polarization conversion system (8) and a second polarization conversion system (9);
the first polarization conversion system (8) is located on a light path between the first light uniformizing device (1) and the first dichroic mirror (3); and
the second polarization conversion system (9) is located on a light path between the second light uniformizing device (4) and the first dichroic mirror (3).

3. The projector optical engine according to claim 1, wherein the projector optical engine further comprises a first polarization conversion system (8); and
the first polarization conversion system (8) is located on a light path between the first light uniformizing device (1) and the first dichroic mirror (3).

4. The projector optical engine according to claim 1, wherein the first light uniformizing device (1) is a compound eye lens, a free-form surface lens, or an integrator rod; and
the second light uniformizing device (4) is a compound eye lens, a free-form surface lens, or an integrator rod.

5. The projector optical engine according to any one of claims 1 to 4, wherein the red-green light providing component (2) comprises a first collection lens group (21), a red light source (22), a second dichroic mirror (23), a second collection lens group (24), and a green light source (25);
the first collection lens group (21) is located on a light path between the red light source (22) and the second dichroic mirror (23);
the second collection lens group (24) is located on a light path between the green light source (25) and the second dichroic mirror (23);
a red light beam provided by the red light source (22) and a green light beam provided by the green light source (25) are combined into the red-green light beam through the second dichroic mirror (23); and
the red light source (22) is a laser diode LD light source or a light-emitting diode LED light source, and the green light source (25) is an LD light source or an LED light source.

6. The projector optical engine according to any one of claims 1 to 4, wherein the blue light providing component (5) comprises a blue light source (51) and a third collection lens group (52); and
the blue light source (51) is an LD light source or an LED light source.

7. The projector optical engine according to any one of claims 1 to 4, wherein the converging lens (6) comprises an integral lens and/or a focusing lens.

8. The projector optical engine according to any one of claims 1 to 4, wherein the imaging component (7) comprises a beam splitter (71), a reflective spatial light modulator (72), and a lens (73); and
the beam splitter (71) is located on a light path between the converging lens (6) and the reflective spatial light modulator (72), and is located on a light path between the reflective spatial light modulator (72) and the lens (73).

9. The projector optical engine according to claim 8, wherein the beam splitter (71) is a polarization beam splitter, and the reflective spatial light modulator (72) is a liquid crystal on silicon LCOS; or
the beam splitter (71) is a beam splitter prism, and the reflective spatial light modulator (72) is a digital micromirror device DMD.

10. The projector optical engine according to claim 9, wherein the polarization beam splitter is a metal wire-grid polarization beam splitter WGP.

11. The projector optical engine according to any one of claims 1 to 4, wherein the imaging component (7) comprises a lens (73) and a liquid crystal display LCD (74); and
the LCD (74) is located on a light path between the converging lens (6) and the lens (73).

12. A display device, comprising the projector optical engine according to any one of claims 1 to 11 and a reflective component (01) for reflecting a light beam output by the projector optical engine.

13. The display device according to claim 12, wherein the display device further comprises a diffusion screen (02), and the diffusion screen (02) is located on a light path between the projector optical engine and the reflective component (01), and is configured to diffuse imaging light output by the projector optical engine.

14. A vehicle, comprising a windshield (10) and the display device according to claim 12 or 13.
